# EUROPEAN PATENT SPECIFICATION

(11) **EP 0 796 828 B1**
(45) Date of publication and mention of the grant of the patent: **01.08.2001**
(21) Application number: 97850038.7
(22) Date of filing: 11.03.1997
(51) Int. Cl.: C04B 35/599, B23B 27/14

(54) **Wear and thermal shock resistant sialon cutting tool material**
Abrieb- und thermoschockbeständiges Sialon-Schneidwerkzeugmaterial
Matériau d'outil coupant en sialon résistant à l'abrasion et au choc thermique

(30) Priority: 18.03.1996 SE 9601058
(43) Date of publication of application: 24.09.1997
(73) Proprietor: SANDVIK AKTIEBOLAG, 811 81 Sandviken (SE)
(72) Inventor: Brandt, Gunnar, 170 68 Solna (SE)
(74) Representative: Östlund, Alf Olof Anders

(56) References cited:
- WO-A-94/12317
- GB-A- 2 155 007
- US-A- 4 900 700

## Description

The present invention relates to sialon material compositions particularly useful for machining of heat resistant alloys.

High temperature alloys are generally machined at very low cutting speeds when using cemented carbide tools due to the very low machinability of heat resistant alloys in comparison to cast iron and steel. More recently developed ceramic cutting tool materials like sialon (US 4,711,644, US 4,818,635 and US 5,370,716) or silicon carbide whisker reinforced alumina tools (US 4,789,277 and US 4,961,757) have significantly increased the productivity by permitting much higher cutting speeds than can be utilized when using cemented carbide tools. Silicon carbide whisker reinforced alumina tools can normally be used at higher cutting speeds than sialon tools due to a better chemical stability whereas sialon tools can be used at higher feed rates due to a better toughness behaviour. Commercial Sialon ceramic cutting tools either are pure beta sialon (Si_{6-z}Al_{z}O_{z}N_{8-z}) where 0<z<3 and intergranular phases, or beta plus alpha sialon [(Si,Al)₁₂Mₓ(O,N)₁₆ where x is between 0.1 and 2 and M can be Li, Ca, Mg, Hf, Zr, Ce, Y, Sc or other lanthanides] and intergranular phases.

US 4,818,635 discloses a sialon material, where the presence of polytype of Sialon together with beta and/or alpha Sialon constitutes the main components.

US 5,370,716 claims a ceramic metal cutting material consisting of sialon grains and an intergranular phase. Preferably 70 % of the sialon grains consist, of beta sialon, Si_{6-z}Al_{z}O_{z}N_{8-z}, with z values between 1.0 and 3, preferably between 1.5 and 3.

GB 21 55 007 relates to a sintered ceramic material based upon silicon nitride containing i) a refractory hard principle phase containing carbides, nitrides and/or carbonitride of metals such as Ti, Nb, Ta etc ii) α'- and β'-sialon and iii) an intergranular phase.

US 4,900,700 discloses a ceramic composite containing less than 90% of a single phase silicon aluminum oxynitride and titanium nitride in an amount of up to about 10% by weight. Also disclosed are silicon nitride containing compositions for forming the composite and methods of producing the composite from the composition.

The present invention relates to a new ceramic sialon cutting tool material based on beta sialon with significantly improved wear resistance compared to commercial grades of sialon with low z-values (z<0.5) and significantly improved thermal shock resistance, without sacrifying wear resistance, compared to commercial sialon grades with high z-values (z>1.5).

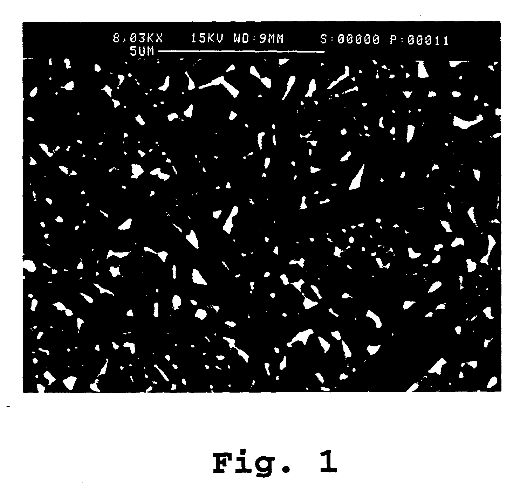

Fig 1 shows a typical microstructure of a sialon material according to the present invention in 8000X magnification. The dark elongated phase is beta sialon phase and the white phase is intergranular phase.

### Thermal shock resistance

The z-value of a pure beta sialon type of material has been found to be very critical with respect to the cutting performance when machining heat resistant alloys.

One characteristic feature about heat resistant alloys is the very high temperatures generated during machining. Typical cutting edge temperatures when machining cast iron range from 500 - 800°C. Steel machining generates considerably higher temperatures 1000-1200°C but in a heat resistant alloy like Inconel 718 even about 200°C higher temperatures than in steel have been measured (Huet, J.F., Kramer, B.M., The wear of ceramic cutting tools, Proceedings of the 10th North American Metalworking Research Conference, Ed R.S. Hahn ASME Dearborn, MI,1983, pp 297-304).

These high temperatures, generated when machining Inconel 718, are enough to cause thermal cracking even in a very thermal shock resistant material like alpha+beta-sialon when machining at high cutting speeds (G. Brandt et al, Wear Mechanisms of Ceramic Cutting Tools when Machining Ferrous and Non-ferrous Alloys, J of the European Cer Soc (1990) 273-290.).

It is thus of utmost importance, when developing a material for heat-resistant alloy machining, not only to optimise wear resistance, toughness and strength but also include thermal shock resistance evaluations, since thermal cracking can be the critical factor determining tool life.

Two approaches are generally used to determine the thermal shock resistance of cutting tools; one is calculation of the thermal shock resistance parameter of the material, based upon critical figures of merit (thermal conductivity, strength, modulus of elasticity, thermal expansion coefficient), the other is to experimentally determine the critical temperature difference needed to introduce thermal cracks in the material. The calculated critical temperature difference can differ considerably from that measured under real conditions.

In the development of the present sialon-material an indentation-quench method was used to determine the resistance to thermal cycling. The inserts to be tested were precracked with Vickers indents to get cracks of well defined size and location. The indented inserts were then heated to different temperatures ranging from 300 to 900°C (at 25°C intervals) in a furnace and subsequently quenched into boiling water. The critical temperature difference ΔT_{c} was defined as the lowest temperature difference (T_{furnace} - 100°C) where the following two conditions were simultaneously fulfilled:
a) the average elongation of the cracks was more than 10% of the original length
b) more than 25 % of the cracks had propagated.

### Example 1

A number of different commercial silicon nitride and beta sialon compositions as well as own produced compositions with z-values according to Table 2 were used to evaluate the influence of z-value on the thermal shock resistance.

In Table 1 examples are given of sialon materials produced.

**Table 1**

| | Amounts in weight% | | | | | |
|---|---|---|---|---|---|---|
| **Material** | **Si**_{**3**}**N**_{**4**} | **Al**_{**2**}**O**_{**3**} | **Y**_{**2**}**O**_{**3**} | **AlN** | **z-value** | **Sintering, 1775 °C** |
| 1 | 87.3 | 6.3 | 6.4 | - | 0.25 | N₂. 1 bar |
| 2 | 78.7 | 8.3 | 6.3 | 6.7 | 0.72 | N₂, 1 bar |
| 3 | 66.8 | 18.2 | 5.0 | 10.0 | 1.41 | *GPS, N₂, 12 bar |
| 4 | 62.7 | 24.2 | 4.9 | 8.2 | 1.97 | N₂, 1 bar |
| 5 | 62.7 | 24.2 | 4.9 | 8.2 | 1.95 | *GPS, N₂, 10 bar |

| | | | | | | |
|---|---|---|---|---|---|---|
| *GPS=Gas Pressure Sintering | | | | | | |

The following results were obtained:

**Table 2**

| Experimentally determined ΔT_{c}-values | | |
|---|---|---|
| z-value | ΔT_{c} °C | Material |
| 0 | 700 | Commercial Silicon Nitride A |
| 0 | 600 | Commercial Silicon Nitride B |
| 0 | 575 | Commercial Silicon Nitride C |
| 1.41 | 600 | Invention (Material 3, Table 1) |
| 1.78 | 275 | Prior art (Commercial sialon) |
| 1.95 | 250 | Comparative (Material 4, Table 1) |
| 1.97 | 250 | Comparative (Material 5, Table 1) |

It is obvious from the results that z-values ≥ 1.5 drastically reduce the thermal shock resistance, whereas a variation between 0-1.4 seems to have very little effect since a z-value of 1.4 gives a ΔT_{c} of the same order as for silicon nitride materials.

### Example 2

Sialon materials with z=1.4 (according to the invention) and z=1.9 (prior art, commercial sialon) were used in a cutting operation designed to simulate a machining under heavy thermal loads like machining with short machining times or varying depth of cut. The operation was a facing operation of an Inconel 718 bar with a diameter of 200 mm. Cutting fluid was used. The facing was discontinuous so that seven entrances and exits were obtained during one facing in order to vary the cutting edge temperature.

The following cutting data were used:

| | |
|---|---|
| Cutting speed | 200 m/min |
| Feed | 0.25 mm/rev |
| Depth of cut | 2.0 mm |

Results:

| **z-value** | **Number of cuts** | **Average** |
|---|---|---|
| 1.4 (Invention) | 1.0; 0.85 | 0.92 |
| 1.9 (Prior art) | 0.42; 0.25 | 0.34 |

It is obvious from the machining test that the z-value or thermal shock resistance has a critical influence on tool life for a machining operation with a heavy thermal load.

### Wear resistance

### Example 3

When machining a bar of Inconel 718 with inserts of type RNGN 120716E the following cutting data were used:
Cutting speed: 350 m/min
Feed: 0.2 mm/rev
Depth of cut: 2.0 mm
Flood coolant was used

Materials with different z-values were selected to study the influence on maximum flank wear. Material numbers refer to Table 1.

Results:

| **Material** | **z-value** | **Flank Wear max, mm** |
|---|---|---|
| 1 | 0.25 | 0.58 |
| 2 | 0.72 | 0.47 |
| 3 | 1.41 | 0.37 |
| 5 | 1.95 | 0.34 |

Maximum flank wear decreases with increasing z-value. However, the effect is less pronounced at higher z-values (z>0.7).

### Example 4

Flank wear measurements were performed using different types of AlN starting materials. AlN cannot be used in water based systems since it readily decomposes to aluminium hydroxides.

From a processing point of view the 21 R polytype material (phase with a superstructure of wurtzite type and situated close to the AlN-corner in the Si-Al-O-N-phase diagram) can advantageously replace AlN since it is stable in water.

Cutting inserts with ISO-designation RNGN 120700E were manufactured using types and amounts of starting materials listed in Table 3.

**Table 3**

| **Starting Material** | **Grade** | **Amount, weight-%** | **Manufacturer** |
|---|---|---|---|
| Silicon Nitride | SN E-10 | 67.8 | Ube Industries, Ltd |
| Polytype | 21 R | 12.8 | Int. Syalons Newcastle Ltd |
| Alumina | A 16SG | 14.5 | Alcoa |
| Yttria | Fine Grade | 4.9 | H.C. Starck |

The powders were mixed and milled together with suitable pressing aids in water. After milling the powder was dried and cold pressed to form insert blanks for the desired insert geometry.

The insert blanks were presintered to remove pressing aids and then sintered in a gas pressure sintering process at 1760°C in N₂ 12 bar for 2 h. After sintering the insert blanks were ground to insert style RNGN 120700E. The z-value was 1.4.

The material was then tested in a grooving and widening operation with coolant in Inconel 718 against a commercial sialon with z=1.9.

The following cutting conditions were used:
Cutting speed: 250 m/min
Feed: 0.15 mm/rev
Depth of Cut: 4 mm

One cut is defined as a grooving operation followed by a widening by 30 % in two steps.

Tool life until a Flank Wear (VB) > 0.50 mm was reached was measured. The results are shown in Table 4.

**Table 4**

| **Number of cuts until VB>0.50 mm** | |
|---|---|
| Material | Number of cuts |
| Invention(z=1.4) | 10,9,12 |
| Commercial sialon (z=1.9) | 9,9,12 |

As shown from Table 4 flank wear resistance is not only dependent on the z-value but also on processing conditions.

### Toughness behaviour

Further evaluation was carried out in the grooving-widening test in order to measure the toughness behaviour of the materials. The test was run until fracture of the insert, which normally was recorded as one or more top slice fractures.

In addition to the material characterized by the starting materials from Table 3 an additional composition was made using AlN as a starting material instead of polytype 21 R. The amount and quantities of starting materials are found in Table 5. This material was consequently milled in propanolic alcohol; otherwise the processing route was identical.

**Table 5**

| **Raw Material** | **Grade** | **Amount, weight-%** | **Manufacturer** |
|---|---|---|---|
| Silicon Nitride | SN E-10 | 66.9 | Ube Industries, Ltd |
| Aluminium Nitride | Grade C | 10.0 | H.C. Starck |
| Alumina | A 16SG | 18.2 | Alcoa |
| Yttria | Fine Grade | 4.9 | H.C. Starck |

The z-value was 1.4.

Cutting tests were performed in the grooving-widening test with the following cutting data:
Cutting speed: 250 m/min
Feed: 0.15 and 0.25 mm/rev
Depth of cut: 0.15 mm/rev

**Table 6**

| **Tool life to fracture** | | | |
|---|---|---|---|
| **Test No 1** | **Number of cuts to fracture** | **Average** | **% increase** |
| Invention (z=1.4) (AlN-based) | 7,9,10,9,7 | 8.4 | 8 |
| Commercial sialon (z=1.8) | 9,6,8,7,9 | 7.8 | |

| **Test No 2** | **Number of cuts to fracture** | **Average** | **% increase** |
|---|---|---|---|
| Invention (z=1.4) (21R-based) | 15,14,15 | 14.7 | 19 |
| Commercial sialon(z=1.8) | 12,12,13 | 12.3 | |

Sialon materials with z=1.4 according to the invention show a better edge toughness behaviour than a commercial sialon material with a z value of z=1.8. This is probably due to a slightly higher fracture toughness.

The preceding examples have shown that the overall best performance of a beta sialon material with respect to wear resistance, thermal shock resistance and toughness behaviour is obtained for a composition with z-values in the range 1.0<z<1.5. If z is lower than 1.0 wear resistance and high cutting speed capability is significantly reduced and if z is larger than 1.5 thermal shock resistance is seriously affected. The material has a bimodal microstructure characterized in (see figure 1) elongated beta-sialon grains with a length up 25 µm and a diameter of up to 5 µm and smaller sialon grains with a diameter<2 µm, preferably <1 µm, with one or more intergranular phases situated in between the sialon grains.

The invention thus relates to a sintered ceramic material for high speed machining of heat resistant alloys. The ceramic material consists of sialon grains and 0.2-20 ^{v}/o, preferably, 5-15 ^{v}/o intergranular phase. At least 80 ^{v}/o, preferably at least 90 ^{v}/o, most preferably 100 ^{v}/o, of the sialon phase is beta sialon. The other sialon phases present may be alpha sialon, but due to deterioration of the thermal shock resistance, it should only be present in amounts up to 20 ^{v}/o of the total sialon, preferably, less than 10 ^{v}/o. In addition less than 10 ^{v}/o, preferably less than 5 ^{v}/o and most preferably less than 3 ^{v}/o of the total sialon may be polytype phases. This is a collective name of a number of phases in the Si-Al-O-N- or in the Me-Si-Al-O-N-systems which are closely related to the wurtzite structure characteristic of AlN. The metal can be Y, Li, Ca, Mg, Be, Sc and metals from the La-series or mixtures thereof.

The intergranular phase is preferably a glass but other, crystalline, intergranular phases can be formed in which metals from the sintering aids are present such as YAG (Yttrium Aluminium Garnet), N-YAM or YAM (Yttrium Aluminium Melilite), b-phase (a distorted form of YAG) and phases having the same structure as apatite or wollastonite.

The material is further characterized in that the beta sialon (Si_{6-z}Al_{z}O_{z}N_{8-z}) has a z-value greater than 1.0, preferably greater than 1.2 but less than 1.5 and in a Vickers Hardness HV1 of more than 1530.

Preferred properties of the material according to the invention are shown in table 7.

**Table 7**

| | |
|---|---|
| z | 1.4 |
| Vickers Hardness (HV10) | 1480-1550 |
| Vickers Hardness (HV1) | >1530-1600 |
| Indentation Fracture Toughness (K1_{c}) | 4.6-5.0 MPam^{1/2} |
| Thermal shock resistance (Δ T_{c}) | 550-600°C |
| Porosity | ≤ A02 |
| Beta-sialon (peak ratio XRD) | 95-100 % |
| 12 H-polytype (peak ratio XRD) | <3 % |
| YAG | <3 v/o |
| Intergranular glass phase | 8-12 v/o |

Further improvements of the wear resistance of the sialon material according to the invention may be obtained by coating with one or more refractory layers such as Al₂O₃, TiC, TiN or Ti(C,N) using methods known in the art such as CVD, MTCVD, PVD etc. The total thickness of the layers is less than 15 µm, preferably less than 10 µm.

Preliminary experiments with thin (1 µm) TiN-coatings on a substrate of the sialon material according to the present invention (z=1.4) showed in the grooving and widening test in Inconel 718 at a cutting speed of 250 m/min, feed 0,25 mm/rev and depth of cut 6 mm a 20 % increase in the number of cuts to fracture and 10 % increase in the flank wear resistance in comparison to the uncoated substrate.

Sialon inserts according to the invention are made by powder metallurgical methods such as milling, pressing and sintering. Suitable proportions of powders of silicon nitride, alumina, yttria and aluminium nitride or polytype 21 R are milled, pressed to insert blanks as known in the art. The insert blanks are placed on sintering trays without embedding in a powder bed and sintered in a gas pressure sintering furnace. The final part of the sintering shall take place at 1700-1800°C and with 10-15 bar nitrogen for 1-3 hours. After sintering the insert blanks are ground to final shape and dimension. The advantage of using gas pressure sintering is that the nitrogen partial pressure is kept sufficiently high to prevent the silicon nitride to decompose or to avoid volatile reactions between Si₃N₄ and metal oxide additions without having to encapsulate the insert blanks (HIP sintering process) or without having to embed the insert blanks with suitable powders (sintering under atmospheric pressure).

The invention also relates to a method for high speed machining of,heat resistant alloys. A sintered ceramic cutting tool consisting of sialon grains and an intergranular phase whereby of more than 70 v/o of the ceramic is sialon and at least 80 ^{v}/o of said sialon phase is beta sialon having a z-value greater than 1.0, but less than 1.5 is brought into contact with a heat resistant alloy workpiece. At least one of the cutting tool and workpiece moves relative to the other whereby material is removed by the cutting tool from the workpiece. The ceramic material has a Vickers Hardness HV1 of more than 1530.

## Claims

1. A sintered ceramic material for high speed machining of heat resistant alloys said ceramic consisting of sialon grains and 0.2-20 v/o intergranular phase whereby at least 80 v/o of said sialon phase is beta sialon Si_{6-z}Al_{z}O_{z}N_{8-z} having a z-value greater than 1.0, but less than 1.5, and a Vickers Hardness HV1 of more than 1530.

2. A sintered ceramic material according to claim 1 **characterised** in having a z-value greater than 1.2.

3. A sintered ceramic material according to claim 1 **characterised** in having a z-value of 1.4.

4. A sintered ceramic material according to any of the preceding claims **characterised** in that said sialon phase is beta sialon.

5. A sintered ceramic material according to any of the preceding claims **characterised** in that the amount of intergranular glass phase,is 8-12 v/o.

6. A method of preparing the material according to claim 1, said method comprising gas pressure sintering whereby the final part of the sintering takes place at 1700-1800°C and 10-15 bar nitrogen for 1-3 hours.

7. A method of high speed machining of heat resistant alloys comprising bringing a cutting tool of the material of claim 1 into contact with a workpiece of a heat resistant alloy and moving at least one of the cutting tool and the work piece to remove material from the workpiece.

## Patentansprüche

1. Gesintertes Keramikmaterial für die Hochgeschwindigkeitsbearbeitung hitzebeständiger Legierungen, wobei die Keramik aus Sialon-Körnern und 0,2-20 v/o interkristalliner Phase besteht und wobei wenigstens 80 v/o der Sialon-Phase Beta-Sialon Si_{6-z}Al_{z}O_{z}N_{8-z} mit einem z-Wert größer als 1,0, aber kleiner als 1,5 und einer Vickershärte HV1 von mehr als 1530 ist.

2. Gesintertes Keramikmaterial nach Anspruch 1, dadurch gekennzeichnet, daß es einen z-Wert größer als 1,2 hat.

3. Gesintertes Keramikmaterial nach Anspruch 1, dadurch gekennzeichnet, daß es einen z-Wert von 1,4 hat.

4. Gesintertes Keramikmaterial nach einem der vorangegangenen Ansprüche, dadurch gekennzeichnet, daß die Sialon-Phase Beta-Sialon ist.

5. Gesintertes Keramikmaterial nach einem der vorangegangenen Ansprüche, dadurch gekennzeichnet, daß die Menge an interkristalliner Glasphase 8-12 v/o beträgt.

6. Verfahren zur Herstellung des Materials nach Anspruch 1, wobei das Verfahren Drucksintem umfaßt, wobei der letzte Teil des Sintems bei 1700-1800°C und 10-15 bar Stickstoff für 1-3 Stunden stattfindet.

7. Verfahren zur Hochgeschwindigkeitsbearbeitung von hitzebeständigen Legierungen, bei dem man ein Schneidwerkzeug aus dem Material nach Anspruch 1 mit einem Werkstück aus einer hitzebeständigen Legierung in Kontakt bringt und wenigstens entweder das Schneidwerkzeug oder das Werkstück zum Entfemen von Material von dem Werkstück bewegt.

## Revendications

1. Matériau de céramique fritté pour l'usinage à vitesse élevée d'alliages résistant à la chaleur, ladite céramique se composant de grains de Sialon et de 0,2 à 20 ^{v}/o d'une phase intergranulaire, ainsi au moins 80 ^{v}/o de ladite phase de Sialon est le Sialon bêta Si_{6-z}Al_{z}O_{z}N_{8-z} ayant une valeur z supérieure à 1,0, mais inférieure à 1,5 et une dureté Vickers HV1 supérieure à 1 530.

2. Matériau de céramique fritté selon la revendication 1, caractérisé en ce qu'il possède une valeur z supérieure à 1,2.

3. Matériau de céramique fritté selon la revendication 1, caractérisé en ce qu'il possède une valeur z de 1,4.

4. Matériau de céramique fritté selon l'une quelconque des revendications précédentes, caractérisé en ce que ladite phase de Sialon est le Sialon bêta.

5. Matériau de céramique fritté selon l'une quelconque des revendications précédentes, caractérisé en ce que la quantité de phase vitreuse intergranulaire est comprise entre 8 et 12 ^{v}/o.

6. Procédé pour préparer le matériau selon la revendication 1, ledit procédé consistant à fritter sous pression, ainsi la partie finale du frittage a lieu entre 1 700°C et 1 800°C et 10 à 15 bars d'azote pendant 1 à 3 heures.

7. Procédé pour l'usinage à vitesse élevée d'alliages résistant à la chaleur consistant à amener un outil de coupe du matériau selon la revendication 1 en contact avec une pièce de fabrication d'un alliage résistant à la chaleur et à déplacer au moins un de l'outil de coupe et de la pièce de fabrication pour retirer de la matière de la pièce de fabrication.
